# EUROPEAN PATENT APPLICATION

(11) **EP 4 764 637 A1**
(43) Date of publication of application: **24.06.2026**
(21) Application number: 24866940.0
(22) Date of filing: 12.06.2024
(51) Int. Cl.: G02B 6/38, G02B 6/42

(54) **POF CONNECTOR HAVING POWER SUPPLY**

(30) Priority: 21.09.2023 CN 202311230378
(71) Applicant: Dongguan Yudim Automotive Technology Co., Ltd, Dongguan, Guangdong 523000 (CN)
(72) Inventor: ZHANG, Xiufeng, Dongguan, Guangdong 523000 (CN); HAO, Huan, Dongguan, Guangdong 523000 (CN); SHUI, Jiangtao, Dongguan, Guangdong 523000 (CN); ZHU, Liang, Dongguan, Guangdong 523000 (CN); HUANG, Yongsheng, Dongguan, Guangdong 523000 (CN)
(74) Representative: De Arpe Tejero, Manuel
(86) International application number: PCT/CN2024/098611
(87) International publication number: WO 2025/060520

(57) **Abstract**

A POF connector having a power supply, comprising a POF female connector (100) and a POF male connector (200). The POF female connector (100) comprises: an insulating seat (1), provided with a counter-insertion slot (12) and a power supply slot (15), a mounting position (11) being disposed at the bottom of the insulating seat (1); two electrode terminals (16), fastened in the insulating seat (1), upper ends of the electrode terminals (16) being exposed in the power supply slot (15), and forming a power supply socket together with the power supply slot (15); and a lens module (300), mounted in the mounting position (11), the lens module (300) comprising a plastic optical fiber lens (2), an input end (221) of a lens body (22) in the plastic optical fiber lens (2) being exposed in the counter-insertion slot (12), and an output end (222) of the lens body (22) being exposed at a lower end of the insulating seat (1). The POF male connector (200) comprises an insulator (5), a plastic core barrel (6), and an optical fiber line (7), a front part of the insulator (5) being provided with a counter-insertion protrusion (51), a front end of the plastic core barrel (6) being exposed at a front end surface of the counter-insertion protrusion (51), and a power plug (9) being further disposed on an outer side of the counter-insertion protrusion (51). The counter-insertion protrusion (51) is inserted into the counter-insertion slot (12), the optical fiber line (7) corresponds to the input end (221) of the lens body (22), the power plug (9) is inserted into the power supply slot (15), and the power supply terminal (92) is in butt joint with the electrode terminal (16).

## Description

### TECHNICAL FIELD

The present disclosure relates to the technical field of connectors, and particularly relates to a plastic optical fiber (POF) connector with a power supply.

### BACKGROUND

With the continuous development of optical fiber communication technologies, increasing requirements are imposed on supporting optical fibers, optical cables and connectors.

The plastic optical fiber (POF) is a type of optical fiber (light-guide fiber) using a highly transparent polymer such as polystyrene (PS), polymethyl methacrylate (PMMA) or polycarbonate (PC) as a core material, and using the PMMA, fluoroplastic, or another material as a cladding material. As an alternative to a silica fiber, the plastic optical fiber is a type of data transmission medium low in cost, light in weight, and easy to mount and use. It is especially suitable for short-distance systems (such as an access network) with medium and small capacities and many connectors. Compared with a multimode silica fiber, the plastic optical fiber is more flexible, features better mechanical ductility and dust resistance, and is easier to mount and maintain. More importantly, a core diameter of the POF is generally 0.5 mm or above, while a core diameter of a multimode silica fiber is 62.5 µm or 50 µm. With the core diameter about 10 times greater, the POF enables easy alignment during connection. For a step-index POF having a core diameter of 980 µm and a graded-index POF having a core diameter of 500 µm, an alignment deviation of ±30 µm during connection will not seriously affect coupling loss (with a loss increase of only about 0.03 dB). In this way, cheap injection-molded connectors can be used, thus significantly reducing the overall system cost. The plastic optical fiber has been widely used in civil fields such as power, medical care, and automotive industries.

The Chinese invention patent (CN205562890U) disclosed a plastic optical fiber socket structure. The structure includes a plastic optical fiber socket including two recesses and optical fiber holes located in the recesses, respectively. Lower side walls of the recesses are each provided with a notch, left and right side surfaces of the recesses are each provided with a clamping groove, and bottoms of the recesses are provided with fixing snap positions. The structure further includes an optical fiber chip including a main body and pins. The main body includes an optical fiber chip receiving port accommodated in the recesses. The pins extend out by passing through the notches of the recesses. In addition, the structure includes a plastic optical fiber cover plate, two sides of which are each provided with a snap fixed in the clamping groove. In this way, a front end surface of the plastic optical fiber cover plate abuts against the main body of the optical fiber chip. Moreover, the structure also includes a printed circuit board (PCB) provided with fixing holes for fixing the fixing snap positions and welding holes for welding connection to the pins; a plastic optical fiber cable penetrating through the optical fiber holes to be connected to the optical fiber chip receiving port; and a plastic optical fiber handle for fixing the plastic optical fiber cable to the plastic optical fiber socket.

However, the plastic optical fiber socket structure can only implement optical signal transmission and has no power conduction function. Thus, it cannot satisfy use scenes requiring power conduction, which causes great inconvenience to users.

In addition, the Chinese invention with the patent number ZL202320232951.6 disclosed an optical fiber plug structure. It includes an optical cable. A fixing sleeve is fixedly mounted on an outer surface of the optical cable, a mounting assembly is arranged on an outer surface closer to one end of the optical cable, and a plug body is arranged at one end of the optical cable. The plug body is used for being plugged into a slot of an optical fiber socket, thus achieving optical signal transmission.

However, the optical fiber plug structure can only implement optical signal transmission and has no power conduction function. Thus, it cannot satisfy use scenes requiring power conduction, which causes great inconvenience to users.

In view of that, the inventor provides the following technical solution.

### SUMMARY

An objective of the present disclosure is to overcome defects in the prior art, and provide a plastic optical fiber (POF) connector with a power supply.

To solve the above technical problems, the present disclosure uses the following technical solution: The POF connector with a power supply includes a POF female connector and a POF male connector plugged into the POF female connector. The POF female connector includes: an insulating seat provided with a mating slot into which the POF male connector is plugged and a power slot that is located beside the mating slot and is in communication with the mating slot, where a bottom of the insulating seat is provided with a mounting position in communication with the mating slot; two electrode terminals fixed in the insulating seat, where upper ends of the electrode terminals are exposed in the power slot, the electrode terminals and the power slot constitute a power socket, and lower ends of the electrode terminals extend out of a lower end surface of the insulating seat; and a lens module mounted in the mounting position. The lens module includes a plastic optical fiber lens. Input ends of lens bodies of the plastic optical fiber lens are exposed in the mating slot, and output ends of the lens bodies are exposed at a lower end of the insulating seat. The POF male connector includes an insulator, plastic core barrels penetrating the insulator, and optical fiber cables fixedly penetrating the plastic core barrels. A front portion of the insulator is provided with a mating protrusion. Front ends of the plastic core barrels are exposed at a front end surface of the mating protrusion. An outer side of the mating protrusion is further provided with a power plug. The power plug includes a plastic housing fixed to the outer side of the mating protrusion, power terminals fixed in the plastic housing, and first wires connected to the power terminals and extending out of the plastic housing. The mating protrusion is plugged into the mating slot. The optical fiber cables correspond to the input ends of the lens bodies. The power plug is plugged into the power slot. The power terminals are coupled to the electrode terminals for conduction.

Further, in the above technical solution, the lens module further includes a support. The plastic optical fiber lens is fixed in the support. An outer side of the support is provided with an inverted snap. An inner wall of the mounting position is provided with a snap hole. The inverted snap is snapped into the snap hole and is vertically movable relative to the snap hole. A metal elastic sheet is further arranged between the support and the mounting position. The metal elastic sheet elastically supports the support relative to the insulating seat. The support is fixed in the mounting position in an elastically floatable manner.

Further, in the above technical solution, a lower end of the support is provided with a mounting groove. An upper end of the support is provided with coupling windows penetrating through the mounting groove. The plastic optical fiber lens is mounted in the mounting groove. The input ends of the plastic optical fiber lens are exposed in the coupling windows. The output ends of the plastic optical fiber lens are exposed to the outside. The metal elastic sheet is embedded in a limiting groove provided in the upper end of the support. A plurality of elastic arms protruding upward are formed on the metal elastic sheet. The elastic arms are in contact with a bottom surface of the mounting position. The mounting groove is further internally provided with a non-circular positioning snap. The plastic optical fiber lens is provided with a through second positioning hole. The positioning snap penetrates through the second positioning hole, to be positioned on the plastic optical fiber lens in a snap-fit manner. A plurality of pressing protrusions are further formed in the mounting groove. The pressing protrusions are pressed against a periphery of the plastic optical fiber lens, to limit the plastic optical fiber lens.

Further, in the above technical solution, the plastic optical fiber lens includes a base and the lens bodies integrally fixed to the base. Each of the lens bodies has one input end and one output end. The input ends correspond to the output ends. The insulating seat is mounted on a printed circuit board (PCB). The output ends of the lens bodies are coupled to an optical fiber chip mounted on the PCB. The lower ends of the electrode terminals are electrically connected to the PCB.

Further, in the above technical solution, a lower end surface of the support is further provided with an avoidance groove for accommodating an optical fiber chip. The output ends of the plastic optical fiber lens are exposed in the avoidance groove. A plurality of positioning bosses are formed on the lower end surface of the insulating seat. Slit grooves, opened upward from bottom surfaces, of the positioning bosses divide the positioning bosses into first positioning columns and second positioning columns. Snap parts protruding outward are further formed on peripheries of lower ends of the second positioning columns. Four corners of the insulating seat are provided with alignment grooves penetrating through the mounting position. Four corners of the support are provided with alignment blocks. The alignment blocks are embedded in the alignment grooves.

Further, in the above technical solution, a detachable structure is arranged between the power plug and the mating protrusion. An outer side of the plastic housing is provided with a guide groove having a T-shaped section. A rear end of the guide groove is provided with a first positioning groove. An anti-disengagement rail having a T-shaped section is integrally formed on the outer side of the mating protrusion. A rear end of the anti-disengagement rail is provided with a first positioning snap. The plastic housing is mounted around the anti-disengagement rail through the guide groove. The first positioning snap is fixed to the first positioning groove in a snap-fit manner. The plastic housing is fixed to the outer side of the mating protrusion. A rear end surface of the plastic housing is further in contact with the front portion of the insulator.

Further, in the above technical solution, the plastic housing is provided with terminal holes penetrating through front and rear ends. The power terminals are plugged and fixed into the terminal holes. The first wires partially extend into the terminal holes. First sealing rings are arranged between exteriors of the first wires and the terminal holes. A second sealing ring is further mounted around a front end of the plastic housing. An outer side surface of a front end of the mating protrusion is provided with an annular groove and an anti-rotation groove that is located beside the annular groove and is in communication with the annular groove. A sealing ring is mounted around the annular groove. An anti-rotation protrusion on an outer side of the sealing ring is embedded in the anti-rotation groove. The front end of the mating protrusion is in sealed contact with a bottom of the mating slot through the sealing ring.

Further, in the above technical solution, a flexible arm is formed on the insulator. The flexible arm is provided with a snap body. A rear end of the insulator is further provided with a secondary snap seat capable of being pushed and pulled to slide back and forth and used for pushing up the flexible arm to support the flexible arm.

Further, in the above technical solution, a front end of the secondary snap seat is provided with a secondary snap. A top surface of a front end of the secondary snap is provided with an inclined surface. The secondary snap is placed in a guiding groove on a lower end surface of the flexible arm. When the secondary snap seat is pushed forward, the inclined surface of the secondary snap is in contact with the lower end surface of the flexible arm and pushes up the flexible arm to support the flexible arm. The rear end of the insulator is provided with a sliding groove. Inner walls on two sides of the sliding groove are provided with rail grooves. Two sides of the secondary snap seat are provided with convex rails matched with the rail grooves. The secondary snap seat is slidably mounted in the sliding groove. The convex rails are embedded in the rail grooves. An anti-skid pushing part on the secondary snap seat is exposed out of an upper end surface of the insulator. Two sides of a bottom surface of the sliding groove are further provided with travel grooves. Two sides of a lower end of the secondary snap seat are further provided with inclined sliding blocks matched with the travel grooves. The inclined sliding blocks are placed in the travel grooves.

Further, in the above technical solution, rear ends of the plastic core barrels are provided with O-rings and positioning ring grooves located at rear ends of the O-rings. The plastic core barrels are hermetically assembled with the insulator through the O-rings. The insulator is provided with core holes penetrating through a front end surface from a rear end surface to the front end surface. A lower end surface of the insulator is further provided with a semi-square-frame-shaped snap-fit groove penetrating through the core holes. A limiting seat is further snapped and fixed into the snap-fit groove on the lower end surface of the insulator. A limiting protrusion formed in the limiting seat is embedded in the positioning ring grooves to prevent the plastic core barrels from moving back. Elastic snap bodies are formed on two sides of the limiting seat. Snap groove bodies are formed on two sides of the snap-fit groove. The elastic snap bodies are snapped and fixed into the snap groove bodies.

Through the above technical solution, compared with the prior art, the present disclosure has the following beneficial effects:
1. The power socket formed by the electrode terminals and the power slot of the POF female connector in the present disclosure can allow the power plug to be plugged thereinto, so as to achieve a power conduction function. That is, the present disclosure can implement optical signal transmission and power transmission simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.
2. The POF female connector in the present disclosure is provided with no optical fiber chip, and no additional structure to fix the optical fiber chip is required. The present disclosure has a simple structure, only the lens bodies of the plastic optical fiber lens are coupled to the optical fiber chip, optical signals are transmitted to the optical fiber chip, and finally the optical fiber chip receives the optical signals. Moreover, the POF female connector in the present disclosure is particularly suitable for the scene where the optical fiber chip is welded and fixed to the PCB and only transmission of the optical signals is required.
3. In the POF female connector of the present disclosure, the support and the plastic optical fiber lens fixed to the support can elastically float relative to the insulating seat. Thus, in actual use, after the POF female connector of the present disclosure is fixedly mounted on the PCB, the plastic optical fiber lens is in elastic contact with the optical fiber chip on the PCB, thus avoiding formation of a gap between the plastic optical fiber lens and the optical fiber chip. In this way, optical signal transmission quality of the plastic optical fiber lens can be ensured. In addition, damage to the plastic optical fiber lens or the optical fiber chip due to rigid contact is prevented, and the service life and quality of a product are ensured.
4. In the POF male connector of the present disclosure, the power plug is arranged on the outer side of the mating protrusion, such that the POF male connector is provided with the power plug. When the present disclosure is used, the mating protrusion and the power plug are simultaneously plugged into the mating slot and the power slot of the POF female connector. The optical fiber cables correspond to the input ends of the lens bodies, the power plug is plugged into the power slot, and the power terminals are coupled to the electrode terminals for conduction. In this way, optical signal transmission and power transmission can be implemented simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.

### BRIEF DESCRIPTION OF THE DRAWINGS

FIG. 1 is a perspective view of a plastic optical fiber (POF) female connector of the present disclosure from a first viewing angle;
FIG. 2 is a perspective view of the POF female connector of the present disclosure from a second viewing angle;
FIG. 3 is a perspective exploded view of the POF female connector of the present disclosure;
FIG. 4 is a perspective view of a POF female connector of the present disclosure from a third viewing angle;
FIG. 5 is a perspective view of an insulating seat of the present disclosure;
FIG. 6 is an assembly diagram of a lens module of the present disclosure;
FIG. 7 is a perspective view of a support of the present disclosure;
FIG. 8 is a perspective view of a POF female connector of the present disclosure coupled to an optical fiber chip;
FIG. 9 is an assembly diagram of a POF female connector of the present disclosure and a printed circuit board (PCB);
FIG. 10 is a perspective view of a POF male connector of the present disclosure;
FIG. 11 is a perspective view of a POF male connector of the present disclosure from another viewing angle;
FIG. 12 is a perspective exploded view of a POF male connector of the present disclosure;
FIG. 13 is a cutaway view of a POF male connector of the present disclosure;
FIG. 14 is a perspective view of a POF male connector of the present disclosure with a limiting seat removed;
FIG. 15 is a perspective view of a secondary snap seat of the present disclosure;
FIG. 16 is a perspective view of a POF male connector of the present disclosure with a power plug removed; and
FIG. 17 is a perspective view of the present disclosure.

### DETAILED DESCRIPTION

The present disclosure will be further described below with reference to specific embodiments and accompanying drawings.

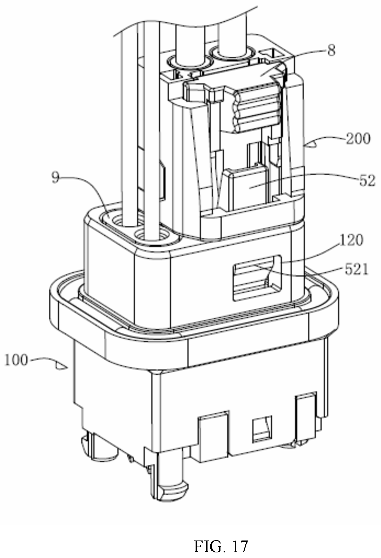

FIG. 17 shows a plastic optical fiber (POF) connector. The POF connector includes a POF female connector 100 and a POF male connector 200 plugged into the POF female connector 200.

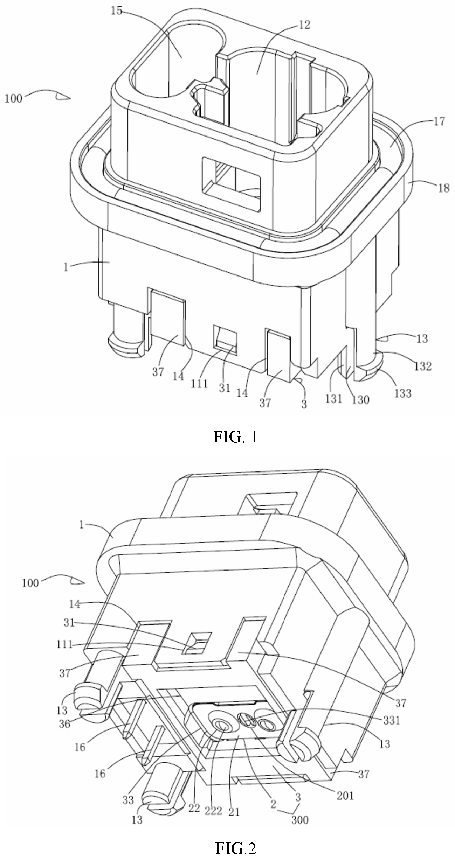

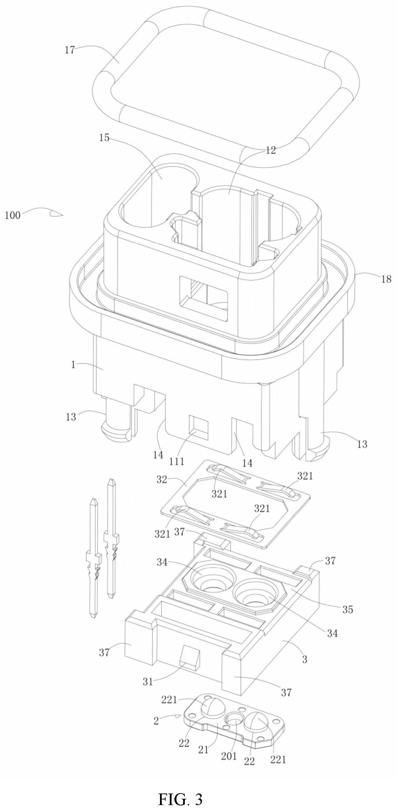

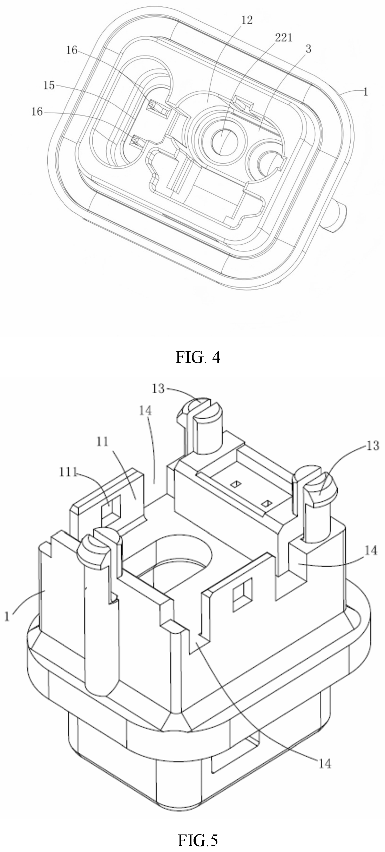

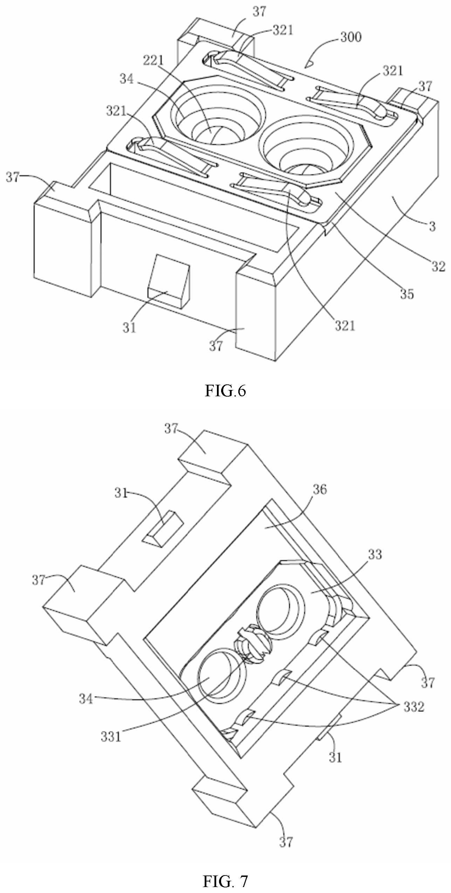

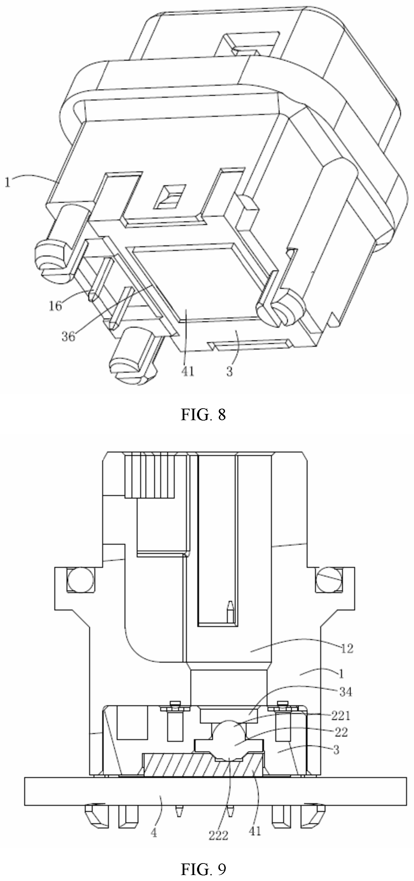

As shown in FIG. 1 to FIG. 9, the POF female connector 100 with a power supply is mounted on a printed circuit board (PCB) 4 and used for transmitting optical signals to an optical fiber chip 41 mounted on the PCB 4. The optical fiber chip 41 receives the optical signals.

The POF female connector 100 includes an insulating seat 1, a lens module 300, and two electrode terminals 16.

The insulating seat 1 is provided with a mating slot 12 into which the POF male connector is plugged and a power slot 15 that is located beside the mating slot 12 and is in communication with the mating slot 12. A bottom of the insulating seat 1 is provided with a mounting position 11 in communication with the mating slot 12. The two electrode terminals 16 are fixed in the insulating seat 1. Upper ends of the electrode terminals 16 are exposed in the power slot 15. The electrode terminals and the power slot 15 constitute a power socket. Lower ends of the electrode terminals 16 extend out of a lower end surface of the insulating seat 1. The lens module 300 is mounted in the mounting position 11. The lens module 300 includes a plastic optical fiber lens 2. Input ends 221 of lens bodies 22 of the plastic optical fiber lens 2 are exposed in the mating slot 12, and output ends 222 of the lens bodies 22 are exposed at a lower end of the insulating seat 1. The insulating seat 1 is mounted on the PCB 4. The output ends 222 of the lens bodies 22 are coupled to the optical fiber chip 41 mounted on the PCB 4. That is, the POF female connector 100 in the present disclosure is provided with no optical fiber chip 41, and no additional structure to fix the optical fiber chip is required. The present disclosure has a simple structure, only the lens bodies 22 of the plastic optical fiber lens 2 are coupled to the optical fiber chip 41, optical signals are transmitted to the optical fiber chip 41, and finally the optical fiber chip 41 receives the optical signals. Moreover, the present disclosure is particularly suitable for the scene where the optical fiber chip is welded and fixed to the PCB and only transmission of the optical signals is required. In addition, the power socket formed by the electrode terminals 16 and the power slot 15 of the POF female connector 100 in the present disclosure can allow the power plug to be plugged thereinto, so as to achieve a power conduction function. That is, the present disclosure can implement optical signal transmission and power transmission simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.

A periphery of the insulating seat 1 is provided with a mounting flange 18. The mounting flange 18 is provided with a groove body, and an O-shaped ring 17 is arranged in the groove body. During use, the insulating seat 1 penetrates through a mounting hole of a casing. The O-shaped ring 17 is in contact with a surface of the casing to achieve sealed assembly.

The lens module 300 further includes a support 3. The plastic optical fiber lens 2 is fixed in the support 3. An outer side of the support 3 is provided with an inverted snap 31. An inner wall of the mounting position 11 is provided with a snap hole 111. The inverted snap 31 is snapped into the snap hole 111 and is vertically movable relative to the snap hole 111. A metal elastic sheet 32 is further arranged between the support 3 and the mounting position 11. The metal elastic sheet 32 elastically supports the support 3 relative to the insulating seat 1. The support 3 is fixed in the mounting position 11 in an elastically floatable manner. That is, the support 3 and the plastic optical fiber lens 2 fixed to the support 3 can elastically float relative to the insulating seat 1. Thus, in actual use, after the POF female connector 100 of the present disclosure is fixedly mounted on the PCB, the plastic optical fiber lens 2 is in elastic contact with the optical fiber chip 41 on the PCB 4, thus avoiding formation of a gap between the plastic optical fiber lens and the optical fiber chip. In this way, optical signal transmission quality of the plastic optical fiber lens 2 can be ensured. In addition, damage to the plastic optical fiber lens or the optical fiber chip due to rigid contact is prevented, and the service life and quality of a product are ensured.

A specific assembly structure of the support 3 and the plastic optical fiber lens 2 is as follows:
A lower end of the support 3 is provided with a mounting groove 33. An upper end of the support 3 is provided with coupling windows 34 penetrating through the mounting groove 33. The plastic optical fiber lens 2 is mounted in the mounting groove 33. The input ends 221 of the plastic optical fiber lens 2 are exposed in the coupling windows 34, and exposed in the mating slot 12. The output ends 222 of the plastic optical fiber lens 2 are exposed to the outside. The mounting groove 33 is further internally provided with a non-circular positioning snap 331. The plastic optical fiber lens 2 is provided with a through second positioning hole 201. The positioning snap 331 penetrates through the second positioning hole 201, to be positioned on the plastic optical fiber lens 2 in a snap-fit manner. Thus, it is ensured that the plastic optical fiber lens 2 is stably mounted in the mounting groove 33. To further improve stability of the assembly structure, a plurality of pressing protrusions 332 are further formed in the mounting groove 33. The pressing protrusions 332 are pressed against a periphery of the plastic optical fiber lens 2, to limit the plastic optical fiber lens 2. In this way, the stability of the assembly structure can be improved.

The metal elastic sheet 32 is embedded in a limiting groove 35 provided in the upper end of the support 3. A plurality of elastic arms 321 protruding upward are formed on the metal elastic sheet 32. The elastic arms 321 are in contact with a bottom surface of the mounting position 11. Thus, a gap between the support 3 and the mounting position 11 can be eliminated, and meanwhile, the support 3 can be stably and elastically supported, such that the support 3 can elastically float relative to the insulating seat 1.

The plastic optical fiber lens 2 includes a base 21 and the lens bodies 22 integrally fixed to the base 21. Each of the lens bodies 22 has one input end 221 and one output end 222. The input ends 221 correspond to the output ends 222.

A lower end surface of the support 3 is further provided with an avoidance groove 36 for accommodating the optical fiber chip 41. The output ends 222 of the plastic optical fiber lens 2 are exposed in the avoidance groove 36. Thus, a light-shielding effect can be achieved, and further transmission performance of the optical signals can be improved.

A plurality of positioning bosses 13 are formed on a lower end surface of the insulating seat 1. The positioning bosses 13 are used for being embedded in and fixed to the PCB. Slit grooves 130, opened upward from bottom surfaces, of the positioning bosses 13 divide the positioning bosses 13 into first positioning columns 131 and second positioning columns 132. Snap parts 133 protruding outward are further formed on peripheries of lower ends of the second positioning columns 132. In this way, the positioning bosses can be embedded in and fixed to the PCB, and can prevent the insulating seat 1 from being accidentally separated from the PCB.

Four corners of the insulating seat 1 are provided with alignment grooves 14 penetrating through the mounting position 11. Four corners of the support 3 are provided with alignment blocks 37. The alignment blocks 37 are embedded in the alignment grooves 14. This ensures that the support 3 is stably assembled in the mounting position 11 and an alignment effect is achieved.

In conclusion, the POF female connector 100 in the present disclosure is provided with no optical fiber chip 41, and no additional structure to fix the optical fiber chip is required. The present disclosure has a simple structure, only the lens bodies 22 of the plastic optical fiber lens 2 are coupled to the optical fiber chip 41, optical signals are transmitted to the optical fiber chip 41, and finally the optical fiber chip 41 receives the optical signals. Moreover, the POF female connector 100 in the present disclosure is particularly suitable for the scene where the optical fiber chip is welded and fixed to the PCB and only transmission of the optical signals is required. In addition, the power socket formed by the electrode terminals 16 and the power slot 15 of the POF female connector 100 in the present disclosure can allow the power plug to be plugged thereinto, so as to achieve a power conduction function. That is, the present disclosure can implement optical signal transmission and power transmission simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.

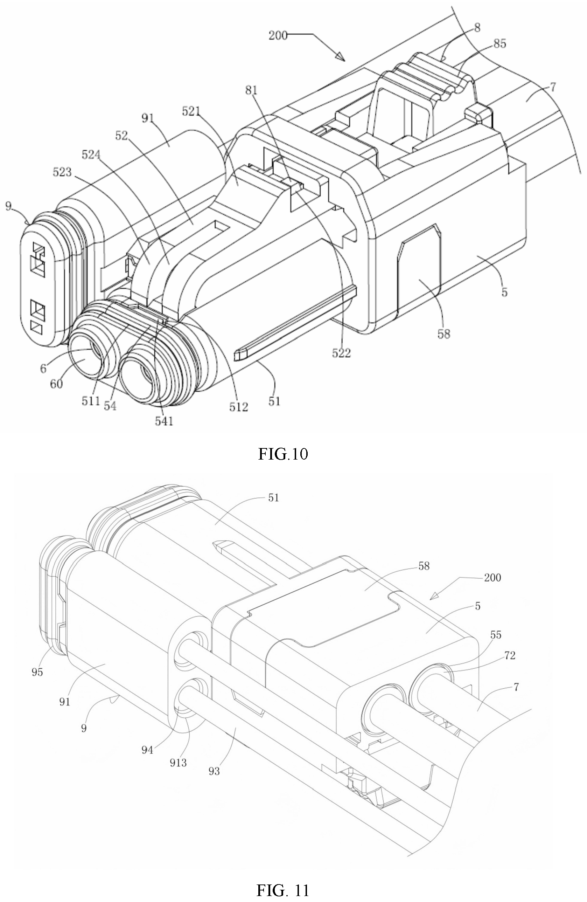

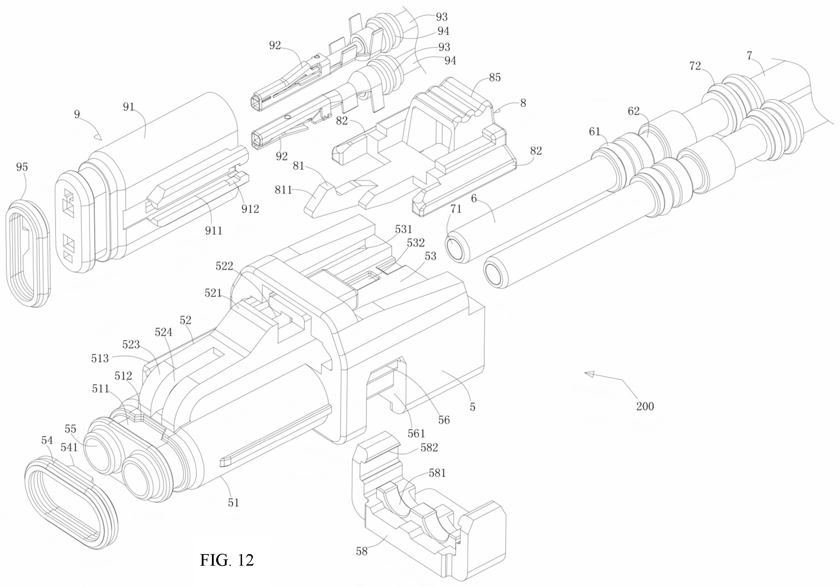

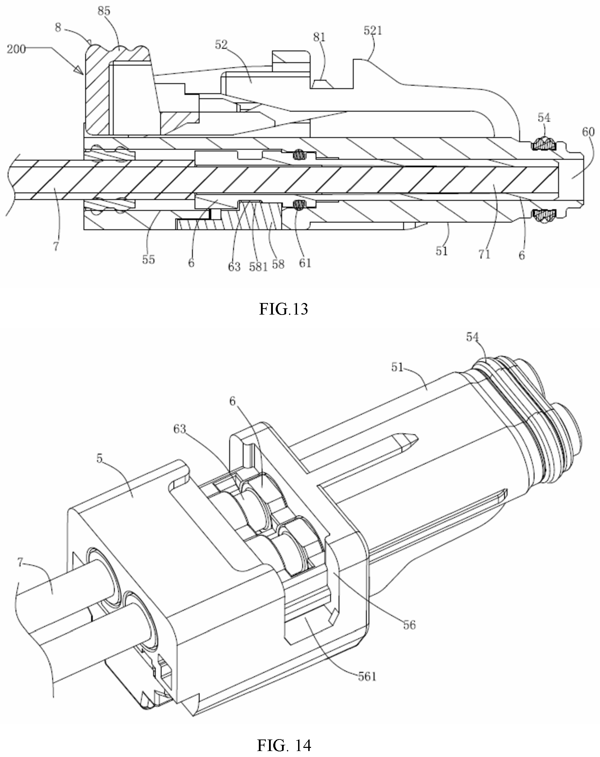

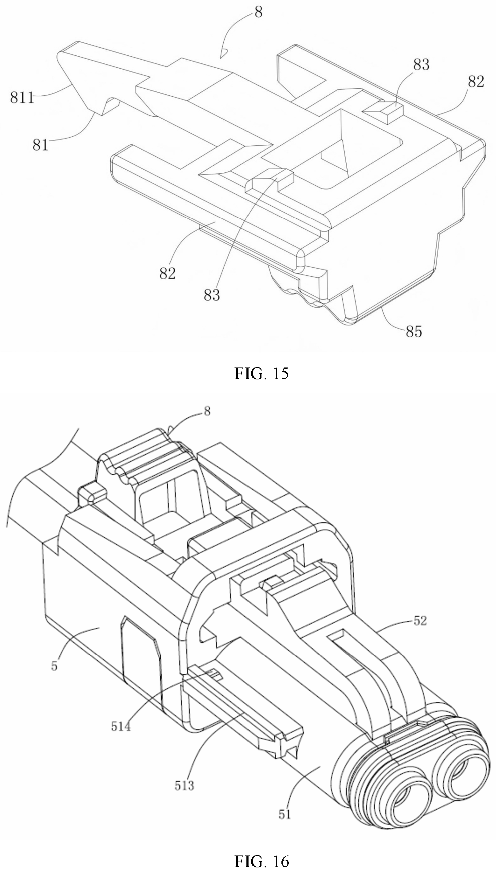

As shown in FIG. 10 to FIG. 16, the POF male connector 200 includes an insulator 5, two plastic core barrels 6 penetrating the insulator 5, and optical fiber cables 7 fixedly penetrating the plastic core barrels 6.

A front portion of the insulator 5 is provided with a mating protrusion 51. Front ends of the plastic core barrels 6 are exposed at a front end surface of the mating protrusion 51. In order to enable the present disclosure to implement power transmission, the following design is further employed: an outer side of the mating protrusion 51 is further provided with a power plug 9. The power plug 9 includes a plastic housing 91 fixed to the outer side of the mating protrusion 51, power terminals 92 fixed in the plastic housing 91, and first wires 93 connected to the power terminals 92 and extending out of the plastic housing 91. That is, in the POF male connector 200 of the present disclosure, the power plug 9 is arranged on the outer side of the mating protrusion 51, such that the POF male connector 200 is provided with the power plug 9. When the present disclosure is used, the mating protrusion 51 and the power plug 9 are simultaneously plugged into the mating slot 12 and the power slot 15 of the POF female connector 100. The optical fiber cables 7 correspond to the input ends 221 of the lens bodies 22, the power plug 9 is plugged into the power slot 15, and the power terminals 92 are coupled to the electrode terminals 16 for conduction. In this way, optical signal transmission and power transmission can be implemented simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.

A detachable structure is arranged between the power plug 9 and the mating protrusion 51. That is, when a power conduction function is not required, the power plug 9 may be detached from the mating protrusion 51, thus making use convenient.

An assembly structure of the power plug 9 and the mating protrusion 51 is as follows: an outer side of the plastic housing 91 is provided with a guide groove 911 having a T-shaped section, and a rear end of the guide groove 911 is provided with a first positioning groove 912; and an anti-disengagement rail 513 having a T-shaped section is integrally formed on the outer side of the mating protrusion 51, a rear end of the anti-disengagement rail 513 is provided with a first positioning snap 514, the plastic housing 91 is mounted around the anti-disengagement rail 513 through the guide groove 911, the first positioning snap 514 is fixed to the first positioning groove 912 in a snap-fit manner, and the plastic housing 91 is fixed to the outer side of the mating protrusion 51. The assembly structure is simple and is convenient to assemble. In addition, a rear end surface of the plastic housing 91 is further in contact with the front portion of the insulator 5. This ensures that the power plug 9 does not move back, and ensures stability of the assembly structure.

The plastic housing 91 is provided with terminal holes 913 penetrating through front and rear ends. The power terminals 92 are plugged and fixed into the terminal holes 913. The first wires 93 partially extend into the terminal holes 913. First sealing rings 94 are arranged between exteriors of the first wires 93 and the terminal holes 913. Thus, dustproof and waterproof effects can be achieved. A second sealing ring 95 is further mounted around a front end of the plastic housing 91.

A flexible arm 52 is formed on the insulator 5. The flexible arm 52 is provided with a snap body 521. A rear end of the insulator 5 is further provided with a secondary snap seat 8 capable of being pushed and pulled to slide back and forth and used for pushing up the flexible arm 52 to support the flexible arm 52. When the present disclosure is used, the POF male connector 200 with a power supply is plugged into the POF female connector 100. The flexible arm 52 and the mating protrusion 51 of the POF male connector 200 with a power supply are plugged into the slot 12 of the POF female connector 100, and the snap body 521 is fixed to a snap hole 120 of the POF female connector 100 in a snap-fit manner. The POF male connector 200 with a power supply is stably connected to the POF female connector 100, and the plastic core barrels 6 correspond to the plastic optical fiber lens in the POF female connector 100, such that optical signal transmission is implemented. In addition, according to the present disclosure, the secondary snap seat 8 additionally arranged on the insulator 5 is capable of being pushed and pulled to slide back and forth and used for pushing up the flexible arm 52 to support the flexible arm 52. In this way, secondary locking of the flexible arm 52 can be implemented, and the flexible arm 52 can be effectively prevented from being pressed down and can be locked. That is, accidental unlocking caused by separation of the snap body 521 of the flexible arm 52 from the snap hole 120 of the POF female connector 100 can be avoided. The POF male connector 200 with a power supply is stably connected to the POF female connector 100 without accidental separation, which can further ensure optical signal transmission quality of the present disclosure.

Specifically, a front end of the secondary snap seat 8 is provided with a secondary snap 81. A top surface of a front end of the secondary snap 81 is provided with an inclined surface 811. The inclined surface 811 plays a guiding role. The secondary snap 81 is placed in a guiding groove 522 on a lower end surface of the flexible arm 52. When the secondary snap seat 8 is pushed forward, the inclined surface 811 of the secondary snap 81 is in contact with the lower end surface of the flexible arm 52 and pushes up the flexible arm 52 to support the flexible arm 52. In this way, secondary locking of the flexible arm 52 can be implemented, and the flexible arm 52 can be effectively prevented from being pressed down and can be locked. That is, accidental unlocking caused by separation of the snap body 521 of the flexible arm 52 from the snap hole 120 of the POF female connector 100 can be avoided. The POF male connector 200 with a power supply is stably connected to the POF female connector 100 without accidental separation, which can further ensure optical signal transmission quality of the present disclosure.

Groove bodies 60 are formed between the front ends of the plastic core barrels 6 and the front end surface of the mating protrusion 51, such that fiber cores 71 in the plastic core barrels 6 are prevented from being exposed and damaged, thus achieving a desirable protection effect.

The rear end of the insulator 5 is provided with a sliding groove 53 in communication with the guiding groove 522. Inner walls on two sides of the sliding groove 53 are provided with rail grooves 531. Two sides of the secondary snap seat 8 are provided with convex rails 82 matched with the rail grooves 531. The secondary snap seat 8 is slidably mounted in the sliding groove 53. The convex rails 82 are embedded in the rail grooves 531, and can stably slide. An anti-skid pushing part 85 on the secondary snap seat 8 is exposed out of an upper end surface of the insulator 5. In this way, the anti-skid pushing part 85 can be easily pressed down to separate the secondary snap seat 8 from the flexible arm 52, thus making operations more convenient.

Two sides of a bottom surface of the sliding groove 53 are further provided with travel grooves 532. Two sides of a lower end of the secondary snap seat 8 are further provided with inclined sliding blocks 83 matched with the travel grooves 532. The inclined sliding blocks 83 are placed in the travel grooves 532. In this way, the inclined sliding blocks 83 can only slide in the travel grooves 532, such that forward and backward sliding travel of the secondary snap seat 8 can be limited, and moving back can be prevented. Thus, the secondary snap seat 8 can be prevented from being accidentally separated from the sliding groove 53, and product quality can be ensured.

An outer side surface of a front end of the mating protrusion 51 is provided with an annular groove 511 and an anti-rotation groove 512 that is located beside the annular groove 511 and is in communication with the annular groove. A sealing ring 54 is mounted around the annular groove 511, and an anti-rotation protrusion 541 on an outer side of the sealing ring 54 is embedded in the anti-rotation groove 512. In this way, rotation of the sealing ring 54 is prevented, stability of the assembly structure is ensured, and meanwhile, a better sealing effect can be achieved. The front end of the mating protrusion 51 is in sealed contact with a bottom of the mating slot 12 through the sealing ring 54, so as to achieve an effective waterproof effect.

Rear ends of the plastic core barrels 6 are provided with O-rings 61 and positioning ring grooves 63 located at rear ends of the O-rings 61, and the plastic core barrels are hermetically assembled with the insulator 5 through the O-rings 61, such that a waterproof effect is achieved. The insulator 5 is provided with core holes 55 penetrating through a front end surface from a rear end surface to the front end surface. A lower end surface of the insulator 5 is further provided with a semi-square-frame-shaped snap-fit groove 56 penetrating through the core holes 55. A limiting seat 58 is further snapped and fixed into the snap-fit groove 56 on the lower end surface of the insulator 5. A limiting protrusion 581 formed in the limiting seat 58 is embedded in the positioning ring grooves 63 to prevent the plastic core barrels 6 from moving back. Further, the plastic core barrels 6 are stably positioned in the insulator 5, and the plastic core barrels 6 can be better protected, to prevent accidental damage to the plastic core barrels 6.

Sealing rings 72 are further mounted around the optical fiber cables 7. The sealing rings 72 are further embedded in the core holes 55, to achieve sealed contact.

Elastic snap bodies 582 are formed on two sides of the limiting seat 58. Snap groove bodies 561 are formed on two sides of the snap-fit groove 56. The elastic snap bodies 582 are snapped and fixed into the snap groove bodies 561. In this way, stability of the assembly structure is ensured.

The flexible arm 52 is J-shaped. An arc-shaped end 523 of the flexible arm 52 is integrally connected to the insulator 5, and the arc-shaped end 523 is further provided with strip-shaped holes 524 distributed in a length direction and used for enhancing an elastic deformation ability. In this way, the elastic deformation ability can be enhanced.

In conclusion, in the POF male connector 200 of the present disclosure, the power plug 9 is arranged on the outer side of the mating protrusion 51, such that the POF male connector 200 is provided with the power plug 9. When the present disclosure is used, the mating protrusion 51 and the power plug 9 are simultaneously plugged into the mating slot 12 and the power slot 15 of the POF female connector 100. The optical fiber cables 7 correspond to the input ends 221 of the lens bodies 22, the power plug 9 is plugged into the power slot 15, and the power terminals 92 are coupled to the electrode terminals 16 for conduction. In this way, optical signal transmission and power transmission can be implemented simultaneously, thus satisfying use scenes requiring both power conduction and optical signal transmission, and satisfying different use requirements. It is unnecessary to additionally provide a set of independent power plug and power socket, and thus a product structure can be simplified, and a product can be more convenient to use.

Clearly, what are described above are merely specific embodiments of the present disclosure, and are not intended to limit the implementation scope of the present disclosure. All equivalent changes or modifications made in accordance to the structures, features and principles within the application scope of the present disclosure shall fall within the application scope of the present disclosure.

## Claims

1. A plastic optical fiber (POF) connector with a power supply, **characterized by** comprising a POF female connector (100) and a POF male connector (200) plugged into the POF female connector (200), wherein
the POF female connector (100) comprises: an insulating seat (1) provided with a mating slot (12) into which the POF male connector is plugged and a power slot (15) that is located beside the mating slot (12) and is in communication with the mating slot (12), wherein a bottom of the insulating seat (1) is provided with a mounting position (11) in communication with the mating slot (12); two electrode terminals (16) fixed in the insulating seat (1), wherein upper ends of the electrode terminals (16) are exposed in the power slot (15), the electrode terminals and the power slot (15) constitute a power socket, and lower ends of the electrode terminals (16) extend out of a lower end surface of the insulating seat (1); and a lens module (300) mounted in the mounting position (11), wherein the lens module (300) comprises a plastic optical fiber lens (2), input ends (221) of lens bodies (22) of the plastic optical fiber lens (2) are exposed in the mating slot (12), and output ends (222) of the lens bodies (22) are exposed at a lower end of the insulating seat (1);
the POF male connector (200) comprises an insulator (5), plastic core barrels (6) penetrating the insulator (5), and optical fiber cables (7) fixedly penetrating the plastic core barrels (6), a front portion of the insulator (5) is provided with a mating protrusion (51), front ends of the plastic core barrels (6) are exposed at a front end surface of the mating protrusion (51), an outer side of the mating protrusion (51) is further provided with a power plug (9), and the power plug (9) comprises a plastic housing (91) fixed to the outer side of the mating protrusion (51), power terminals (92) fixed in the plastic housing (91), and first wires (93) connected to the power terminals (92) and extending out of the plastic housing (91); and
the mating protrusion (51) is plugged into the mating slot (12), the optical fiber cables (7) correspond to the input ends (221) of the lens bodies (22), the power plug (9) is plugged into the power slot (15), and the power terminals (92) are coupled to the electrode terminals (16) for conduction.

2. The POF connector with a power supply according to claim 1, **characterized in that** the lens module (300) further comprises a support (3), the plastic optical fiber lens (2) is fixed in the support (3), an outer side of the support (3) is provided with an inverted snap (31), an inner wall of the mounting position (11) is provided with a snap hole (111), the inverted snap (31) is snapped into the snap hole (111) and is vertically movable relative to the snap hole (111), a metal elastic sheet (32) is further arranged between the support (3) and the mounting position (11), the metal elastic sheet (32) elastically supports the support (3) relative to the insulating seat (1), and the support (3) is fixed in the mounting position (11) in an elastically floatable manner.

3. The POF connector with a power supply according to claim 2, **characterized in that** a lower end of the support (3) is provided with a mounting groove (33), an upper end of the support (3) is provided with coupling windows (34) penetrating through the mounting groove (33), the plastic optical fiber lens (2) is mounted in the mounting groove (33), the input ends (221) of the plastic optical fiber lens (2) are exposed in the coupling windows (34), and the output ends (222) of the plastic optical fiber lens (2) are exposed to the outside; the metal elastic sheet (32) is embedded in a limiting groove (35) provided in the upper end of the support (3), a plurality of elastic arms (321) protruding upward are formed on the metal elastic sheet (32), and the elastic arms (321) are in contact with a bottom surface of the mounting position (11); the mounting groove (33) is further internally provided with a non-circular positioning snap (331); the plastic optical fiber lens (2) is provided with a through second positioning hole (201), and the positioning snap (331) penetrates through the second positioning hole (201), to be positioned on the plastic optical fiber lens (2) in a snap-fit manner; and a plurality of pressing protrusions (332) are further formed in the mounting groove (33), and the pressing protrusions (332) are pressed against a periphery of the plastic optical fiber lens (2), to limit the plastic optical fiber lens (2).

4. The POF connector with a power supply according to claim 2, **characterized in that** the plastic optical fiber lens (2) comprises a base (21) and the lens bodies (22) integrally fixed to the base (21), each of the lens bodies (22) has one input end (221) and one output end (222), and the input ends (221) correspond to the output ends (222); the insulating seat (1) is mounted on a printed circuit board (PCB) (4), and the output ends (222) of the lens bodies (22) are coupled to an optical fiber chip (41) mounted on the PCB (4); and the lower ends of the electrode terminals (16) are electrically connected to the PCB (4).

5. The POF connector with a power supply according to claim 2, **characterized in that** a lower end surface of the support (3) is further provided with an avoidance groove (36) for accommodating an optical fiber chip (41), and the output ends (222) of the plastic optical fiber lens (2) are exposed in the avoidance groove (36); a plurality of positioning bosses (13) are formed on the lower end surface of the insulating seat (1); slit grooves (130), opened upward from bottom surfaces, of the positioning bosses (13) divide the positioning bosses (13) into first positioning columns (131) and second positioning columns (132), and snap parts (133) protruding outward are further formed on peripheries of lower ends of the second positioning columns (132); four corners of the insulating seat (1) are provided with alignment grooves (14) penetrating through the mounting position (11); and four corners of the support (3) are provided with alignment blocks (37), and the alignment blocks (37) are embedded in the alignment grooves (14).

6. The POF connector with a power supply according to any one of claims 1 to 5, **characterized in that** a detachable structure is arranged between the power plug (9) and the mating protrusion (51); an outer side of the plastic housing (91) is provided with a guide groove (911) having a T-shaped section, and a rear end of the guide groove (911) is provided with a first positioning groove (912); and an anti-disengagement rail (513) having a T-shaped section is integrally formed on the outer side of the mating protrusion (51), a rear end of the anti-disengagement rail (513) is provided with a first positioning snap (514), the plastic housing (91) is mounted around the anti-disengagement rail (513) through the guide groove (911), the first positioning snap (514) is fixed to the first positioning groove (912) in a snap-fit manner, the plastic housing (91) is fixed to the outer side of the mating protrusion (51), and a rear end surface of the plastic housing (91) is further in contact with the front portion of the insulator (5).

7. The POF connector with a power supply according to claim 6, **characterized in that** the plastic housing (91) is provided with terminal holes (913) penetrating through front and rear ends, the power terminals (92) are plugged and fixed into the terminal holes (913), the first wires (93) partially extend into the terminal holes (913), and first sealing rings (94) are arranged between exteriors of the first wires (93) and the terminal holes (913); a second sealing ring (95) is further mounted around a front end of the plastic housing (91); an outer side surface of a front end of the mating protrusion (51) is provided with an annular groove (511) and an anti-rotation groove (512) that is located beside the annular groove (511) and is in communication with the annular groove; and a sealing ring (54) is mounted around the annular groove (511), an anti-rotation protrusion (541) on an outer side of the sealing ring (54) is embedded in the anti-rotation groove (512), and the front end of the mating protrusion (51) is in sealed contact with a bottom of the mating slot (12) through the sealing ring (54).

8. The POF connector with a power supply according to any one of claims 1 to 5, **characterized in that** a flexible arm (52) is formed on the insulator (5), and the flexible arm (52) is provided with a snap body (521); and a rear end of the insulator (5) is further provided with a secondary snap seat (8) capable of being pushed and pulled to slide back and forth and used for pushing up the flexible arm (52) to support the flexible arm (52).

9. The POF connector with a power supply according to claim 8, **characterized in that** a front end of the secondary snap seat (8) is provided with a secondary snap (81), and a top surface of a front end of the secondary snap (81) is provided with an inclined surface (811); the secondary snap (81) is placed in a guiding groove (522) on a lower end surface of the flexible arm (52), when the secondary snap seat (8) is pushed forward, the inclined surface (811) of the secondary snap (81) is in contact with the lower end surface of the flexible arm (52) and pushes up the flexible arm (52) to support the flexible arm (52), the rear end of the insulator (5) is provided with a sliding groove (53), inner walls on two sides of the sliding groove (53) are provided with rail grooves (531), two sides of the secondary snap seat (8) are provided with convex rails (82) matched with the rail grooves (531), the secondary snap seat (8) is slidably mounted in the sliding groove (53), the convex rails (82) are embedded in the rail grooves (531), and an anti-skid pushing part (85) on the secondary snap seat (8) is exposed out of an upper end surface of the insulator (5); two sides of a bottom surface of the sliding groove (53) are further provided with travel grooves (532); and two sides of a lower end of the secondary snap seat (8) are further provided with inclined sliding blocks (83) matched with the travel grooves (532), and the inclined sliding blocks (83) are placed in the travel grooves (532).

10. The POF connector with a power supply according to claim 9, **characterized in that** rear ends of the plastic core barrels (6) are provided with O-rings (61) and positioning ring grooves (63) located at rear ends of the O-rings (61), and the plastic core barrels are hermetically assembled with the insulator (5) through the O-rings (61); the insulator (5) is provided with core holes (55) penetrating through a front end surface from a rear end surface to the front end surface, a lower end surface of the insulator (5) is further provided with a semi-square-frame-shaped snap-fit groove (56) penetrating through the core holes (55), a limiting seat (58) is further snapped and fixed into the snap-fit groove (56) on the lower end surface of the insulator (5), and a limiting protrusion (581) formed in the limiting seat (58) is embedded in the positioning ring grooves (63), to prevent the plastic core barrels (6) from moving back; and elastic snap bodies (582) are formed on two sides of the limiting seat (58), snap groove bodies (561) are formed on two sides of the snap-fit groove (56), and the elastic snap bodies (582) are snapped and fixed into the snap groove bodies (561).
